# EUROPEAN PATENT APPLICATION

(11) **EP 3 650 178 A1**
(43) Date of publication of application: **13.05.2020**
(21) Application number: 18382794.8
(22) Date of filing: 07.11.2018
(51) Int. Cl.: B25J 9/16

(54) **SIMULATING MANUFACTURING OPERATIONS**

(71) Applicant: ABB Schweiz AG, 5400 Baden (CH)
(72) Inventor: Vilacoba Casais, Diego, 08192 Sant Quirze Del Vallés (ES); Groth, Tomas, 724 80 Västerås (CH)
(74) Representative: ZBM Patents - Zea, Barlocci & Markvardsen

(57) **Abstract**

Methods are provided of simulating operation of first manufacturing-device in cooperation with second manufacturing-device to jointly perform a manufacturing operation. First manufacturing-device is configured to move relative to second manufacturing-device according to predefined program including calculating positions of first manufacturing-device to be achieved depending on manufacturing operation, so as to drive first manufacturing-device to move according to calculated positions. These simulation methods include: activating disabled-motion mode of first manufacturing-device in which positions of first manufacturing-device are calculated but motion is disabled; representing, in a virtual environment, a virtual version of first manufacturing-device and a virtual version of second manufacturing-device; receiving calculated positions of the first manufacturing-device; and representing, in the virtual environment, a virtual version of the manufacturing operation including virtual motion of the virtual version of first manufacturing-device depending on received calculated positions of first manufacturing-device. Computer programs and systems suitable for performing such simulation methods are also provided.

## Description

The present disclosure relates to methods of simulating operation of a first manufacturing device in cooperation with a second manufacturing device to jointly perform a manufacturing operation, and to computer programs, systems and computing systems suitable for performing such simulation methods.

### BACKGROUND

It is known the use of manufacturing devices in manufacturing lines to perform manufacturing operations, in which a first manufacturing device and a second manufacturing device cooperate to perform manufacturing operations. Examples of manufacturing lines are press lines, assembly lines, cutting lines, etc. in which several movable machines, e.g. robots, interact together to perform manufacturing operations, such as press operations, assembly operations, cutting operations etc. Manufacturing devices may also be denominated as fabrication devices, industrial devices, etc. Manufacturing lines may also be denominated as fabrication lines, industrial lines, etc. Manufacturing operations may also be denominated as fabrication operations, industrial operations, etc.

Industrial robots may be used to load and unload workpieces or parts to be press-processed by press devices in a press line. Industrial robots may be used to e.g. pick blanks from a stack at a pick-up position and load them in a press line, e.g. a stamping press line. These applications may be aimed at e.g. manufacturing vehicle bodywork parts or similar. Other types of manufacturing lines may be based on similar principles to perform other types of manufacturing operations. An assembly line may include movable machines (e.g. robots) interacting with each other to assemble different parts of a final or non-final product, a cutting line may include movable machines (e.g. robots) interacting with each other to cut certain parts of a final or non-final product, and so on.

In the present disclosure an "industrial robot" is an automatically controlled, reprogrammable multipurpose manipulator that is programmable in three or more axes, in accordance with the definition of ISO Standard 8373.

Different end effectors to be operated by an industrial robot may be mounted on the wrist of the robot: for example, grippers for handling and transferring blanks between two different press systems in a press line.

In a press line, presses or press devices never stop and the robots have to load and unload these machines, synchronously with the press devices. Cutting lines may follow similar principles but, in this case, robots are dedicated to load and unload cutting machines. Same or similar aspects may be considered with respect to assembly lines. Robot(s) or associated control system(s) may be based on calculating positions to be achieved by the robot(s) and driving motion of the robot(s) according to said calculated positions.

These calculations should match or synchronize the position(s) of the robot with the position(s) of corresponding press device, cutting device, assembling device, etc. in an accurate manner. Robot has to achieve a certain position in a certain moment according to motion of the press device, cutting device, assembling device, etc. If there is an error in these calculations, high possibility or risk of collision may arise between the robot and the press device, cutting device, assembling device, etc. And such collision(s) may cause e.g. serious damages on machines, significant delay(s) in re-starting the manufacturing line, etc.

Manufacturing lines are normally commissioned based on pre-calculations in offline methods like calculations sheets, MATLAB®, or other types of software with same or similar purposes. These pre-calculations are crucial for first manufacturing operation(s) performed by manufacturing lines. A small error in these pre-calculations, may cause e.g. a collision between manufacturing devices (e.g. between a robot and a press). And such collision(s) may cause e.g. serious damages on machines, significant delay(s) in re-starting the manufacturing line, etc.

An object of the present disclosure is to provide new tools such as methods, systems and computer programs aimed at improving current techniques of monitoring manufacturing lines and corresponding machines and operations.

### SUMMARY

In a first aspect, a method is provided of simulating operation of a first manufacturing device in cooperation with a second manufacturing device to jointly perform a manufacturing operation. The first manufacturing device is a programmable moving device configured to move with respect to the second manufacturing device according to a predefined program. The predefined program includes calculating positions of the first manufacturing device to be achieved depending on the manufacturing operation, so as to drive the first manufacturing device to move according to the calculated positions. The first manufacturing device is configured to operate in a disabled-motion mode in which positions of the first manufacturing device are calculated but motion is disabled.

The "simulation" method includes activating the disabled-motion mode of the first manufacturing device, representing (in a virtual environment) a virtual version of the first manufacturing device and a virtual version of the second manufacturing device, and receiving motion positions including the calculated positions of the first manufacturing device. The "simulation" method further includes representing (in the virtual environment) a virtual version of the manufacturing operation including virtual motion of the virtual version of the first manufacturing device depending on the received calculated positions of the first manufacturing device.

Motion positions are defined herein as those positions achieved or to be achieved by a moving device to perform a given or target motion. In other words, motion positions are those positions of a moving device defining the motion performed or to be performed by the moving device.

The suggested simulation methods may permit monitoring very accurately a manufacturing line and, in particular, a moving industrial device, such as e.g. industrial robot, without the need of physically being at the manufacturing line, i.e. in situ. This monitoring may thus be performed remotely by analysing simulations performed by the proposed simulation methods, in a very accurate manner since simulations are based on real positions of real robot or robots. In factories with many, several manufacturing lines, monitoring of said lines may be performed in a centralised manner at e.g. a simulation centre where all the lines may be simulated very closely to reality. A monitoring specialist may control the every-day operation of many manufacturing lines in a centralised way in order to detect malfunctions, improvements, corrections, etc. and, therefore, minimize the risk of collisions and damages.

In particular, the proposed disabled-motion approach may permit commissioning a manufacturing line with full security in the sense that first "physical" operation(s) may be initiated with no risk or minimum risk of collisions. The manufacturing line may be simulated as many times as necessary by performing the simulation method according to disabled-motion approach, so as to ensure collision-free first operation(s). Once commissioned, manufacturing lines may be continuously or regularly or timely monitored through corresponding simulations, so as to detect operational deviations, mismatches, corruptions, etc. during the whole life cycle of the manufacturing line. Corrective measures may be then defined and implemented by competent operator/specialist depending on what he/she has seen in simulations, in order to resolve, minimize or correct detected deviations, mismatches or corruptions.

The second manufacturing device may be a moving device and the calculation of positions of the first manufacturing device may further depend on positions defining the motion of the second manufacturing device. In this case, receiving the motion positions may further include receiving positions of the second manufacturing device defining the motion of the second manufacturing device. Accordingly, representing the virtual version of the manufacturing operation may further include representing virtual motion of the virtual version of the second manufacturing device depending on the received positions of the second manufacturing device.

The simulation method may activate the disabled-motion mode of the first manufacturing device by e.g. sending a control signal to the first manufacturing device indicating or requesting activation of the disabled-motion mode.

Receiving the motion positions may include receiving the motion positions through a high speed rate communication protocol, such as e.g. an Ethernet based protocol.

The predefined program may be updatable and, accordingly, the simulation method may further include representing a virtual version of the predefined program that may be updatable (by e.g. pertinent operator) so as to adjust the virtual motion of the virtual version of the first manufacturing device. In particular examples, update(s) performed in the virtual version of the predefined program may be sent to the first manufacturing device or associated control system for accordingly updating the predefined program driving the first manufacturing device.

At least part of the virtual representations performed in the virtual environment may be based on augmented reality and/or any existing platform configured to virtualize moving machines and their operation, such as e.g. ABB's Robot Studio®, Unity3D®, etc.

In a second aspect, computer programs are provided comprising program instructions for causing a computing system to perform previous methods or similar of simulating operation of a first manufacturing device in cooperation with a second manufacturing device to jointly perform a manufacturing operation. These computer programs may be embodied on a storage medium and/or carried on a carrier signal.

In a third aspect, computing systems are provided for simulating operation of a first manufacturing device in cooperation with a second manufacturing device to jointly perform a manufacturing operation. These computing systems comprise a memory and a processor, embodying instructions stored in the memory and executable by the processor. The instructions comprise functionality or functionalities to execute previous methods or similar of simulating operation of a first manufacturing device in cooperation with a second manufacturing device to jointly perform a manufacturing operation.

In a fourth aspect, systems are provided that are configured to perform previous methods or similar of simulating operation of a first manufacturing device in cooperation with a second manufacturing device to jointly perform a manufacturing operation. These systems comprise a disabled-motion module, a first representing module, a receptor module, and a second representing module, said modules providing corresponding functionalities conjointly implementing previous simulation methods or similar.

Manufacturing lines may also be provided comprising first manufacturing device(s), second manufacturing device(s), and a (computing) "simulation" system similar to the previous ones for simulating operation of the first manufacturing device(s) in cooperation with the second manufacturing device(s) to jointly perform manufacturing operation(s). For example: press lines may be provided including loading robot(s), press device(s) and simulation system; cutting lines may be provided including loading robot(s), cutting device(s) and simulation system; assembly lines may be provided including loading robot(s), assembly device(s) and simulation system; etc.

### BRIEF DESCRIPTION OF THE DRAWINGS

Non-limiting examples of the present disclosure will be described in the following, with reference to the appended drawings, in which:
Figure 1 is a perspective view of a press line including robots for picking and loading blanks, and a simulation system according to examples;
Figure 2 is a block diagram schematically illustrating simulation systems according to examples;
Figure 3 is a flow chart schematically illustrating simulation methods according to examples; and
Figure 4 is a flow chart schematically illustrating simulation methods according to further examples.

### DETAILED DESCRIPTION OF EXAMPLES

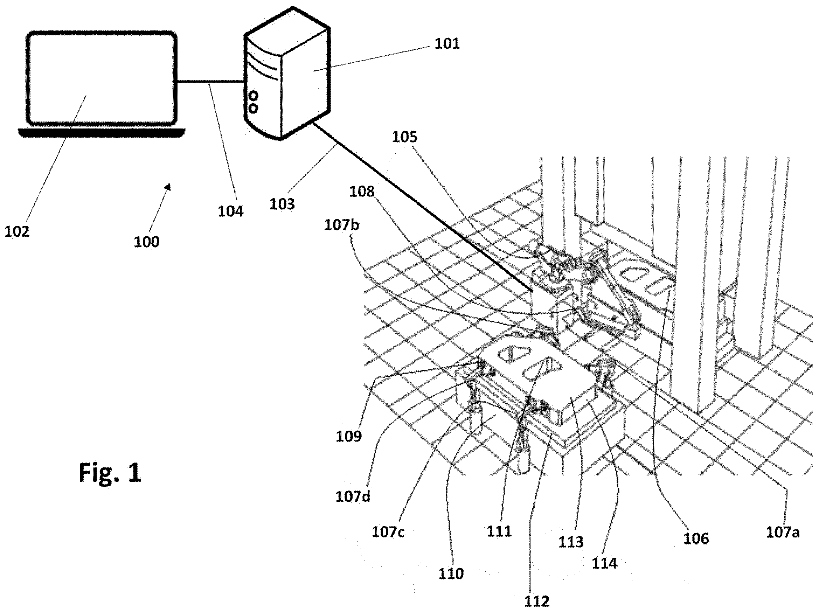

Figure 1 is a perspective view of a press line including robots for picking and loading blanks, and a simulation system according to examples.

According to said figure, simulation systems 100 may include a computing system 101 and a display or screen 102 connected with the computing system 101 through suitable connection(s) 104. The computing system 101 may be connected with first manufacturing device (e.g. loading robot) 105 through corresponding connection(s) 103. Data transmission(s) over said connections may be based on a high speed rate communication protocol, which may be an Ethernet based protocol such as e.g. a User Datagram Protocol (UDP) or similar.

Loading robot 105 may be programmed to move between a stack of blanks 114 and a second manufacturing device (e.g. press device) 106. Said motion of the robot 105 may include motion towards a pick up position 111 for picking up a blank 113 from the stack of blanks 114, and motion to provide the blank 113 in a desired position to be loaded to the press device 106. This cooperation between the loading robot 105 and the press device 106 may be denominated manufacturing operation or, in the particular example shown, press operation.

A plurality of separating robots 107a, 107b, 107c and 107d may have separating tools 109 activated, thus the blank situated on the top of the stack of blanks 114 may be maintained slightly separated from remaining blanks. As blanks are removed from the stack 114, and unless a stacking support 112 is provided with a lift, the height of the stack 114 will decrease; the separating robots 107a, 107b, 107c and 107d may then progressively adjust the position of the separating tools 109 to the stack 114 height.

The stacking support 112 may comprise a carriage 110 which may be displaceable along a track (not shown). The carriage 110 may be driven by a linear motor (not shown) but other options are possible. The stacking support 112 may be provided with load detecting means (not shown) to detect that the stack of blanks 114 is exhausted, or that only a predetermined number of blanks remain.

The loading robot 105 may have e.g. four axes or more. The loading robot 105 may comprise a tooling 108 with e.g. suction cups suitable for handling the blank although in some other embodiments the tooling may comprise e.g. magnets suitable for handling the blank 113. The tooling 108 may be attached at the distal end of the loading robot 105. The loading robot 105 is schematically shown mounted on the floor but some other configurations may be possible, e.g. roof or shelf mounted.

The loading robot 105 may comprise a predefined program whose execution may include calculating positions of the loading robot 105 to be achieved depending on the manufacturing operation to be performed or being performed. Such a calculation of positions may further depend on the motion of the press device 106 to perform the manufacturing or press operation in an accurate coordinated manner.

The simulation system 100 may be configured to activate the disabled-motion mode of the loading robot 105, to represent (in a virtual environment) a virtual version of the loading robot 105 and a virtual version of the press device 106, and to receive motion positions during the manufacturing operation. Such motion positions may include the calculated positions of the loading robot 105 and, when required, positions of the press device 106 defining the motion of the press device 106 during the manufacturing operation.

The simulation system 100 may be further configured to represent, in the virtual environment, a virtual version of the manufacturing operation including virtual motion of the virtual loading robot 105 and virtual motion of the virtual press device 106. The virtual motion of the virtual loading robot 105 may depend on (or correspond to) the received calculated positions of the real loading robot 105. The virtual motion of the virtual press device 106 may depend on (or correspond to) the received motion positions of the real press device 106.

The virtual environment may be created and evolved by using any known platform configured to virtualize moving machines (e.g. robots, presses, etc.) and their operation, such as e.g. ABB's Robot Studio®, Unity3D®, etc. The virtual environment may be displayed on e.g. a screen 102 or any other visualizer device suitable for that.

The received real motion positions may be expressed according to a 3D or XYZ coordinate system, and an imaging method may be used to convert XYZ components of the real devices and motion positions into corresponding imaging units/components, e.g. pixels, displayable on e.g. the screen 102. Any known imaging technique or approach may be used for that aim. Tailored software developments may also be used to implement functionalities that are not provided by the virtualizing platform.

Imaging principles compatible with the above approach of representing real motion positions may be employed to represent any other type of virtual element or motion in the virtual environment. For example, representation of corresponding virtual loading robot 105, virtual press device 106, virtual blanks to be processed, virtual separating robots, relative location/orientation between them, etc. may be implemented based on the above XYZ coordinate system and corresponding imaging method, virtualizing platform, etc.

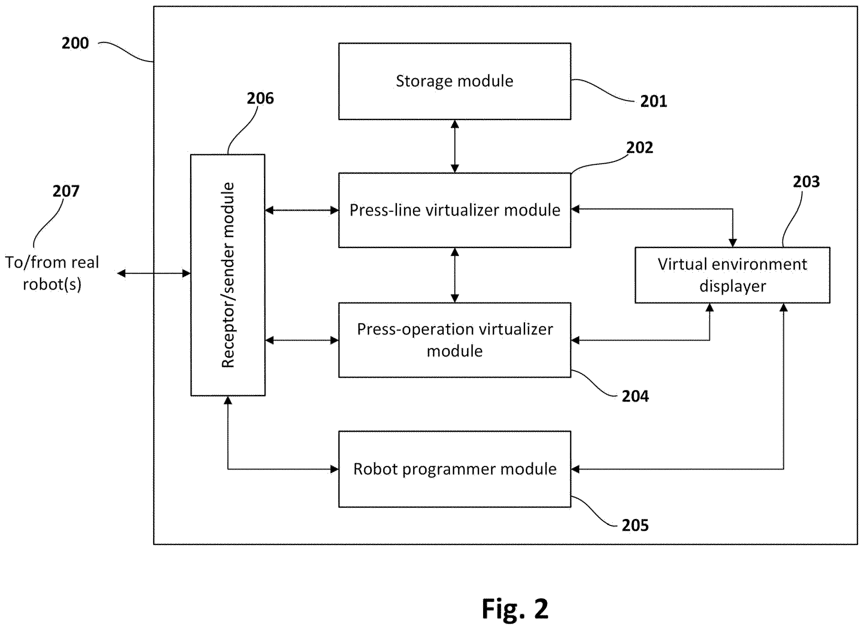

Figure 2 is a block diagram schematically illustrating simulation systems according to examples. According to this figure, simulation systems 200 may comprise a disabled-motion module (in e.g. receptor/sender module 206), a first representing module (e.g. press-line virtualizer module) 202, a receptor module (e.g. receptor/sender module 206), and a second representing module (e.g. press-operation virtualizer module) 204. Such simulation systems 200 are usable in scenarios similar to the ones described with reference to Figure 1. Hence, number references from Figure 1 may be reused in following description of Figure 2 for the sake of completeness.

The press-line virtualizer module 202 may be configured to represent, in a virtual environment, a virtual version of a first manufacturing device (e.g. loading robot) 105 and a virtual version of a second manufacturing device (e.g. press device) 106. The press-line virtualizer module 202 may be configured to e.g. convert XYZ coordinates defining dimensions, spatial magnitudes characterizing the first and second manufacturing devices 105, 106 into corresponding imaging units/components, e.g. pixels. Said imaging units may be displayable by/on a virtual environment displayer 203 which may comprise e.g. a screen 102, augmented reality device, virtual reality platform, etc.

A storage module 201 may be configured to store required data such as e.g. dimensions, spatial magnitudes, relative dispositions, etc. characterizing the loading robot 105, press device 106, and/or any other element to be virtualized. The press-line virtualizer module 202 may thus obtain e.g. XYZ coordinates defining spatial data characterizing the first and second manufacturing devices 105, 106, relative disposition(s) between them, and any other element to be virtualized from the storage module 201.

The receptor/sender module 206 may be configured to receive e.g. XYZ coordinates or displacements defining motion positions of the loading robot 105, the press device 106, etc. The receptor/sender module 206 may be also configured to send data to said real devices (robot 105, press 106, etc.) that are virtualized in corresponding simulation, such as e.g. a control signal to activate a disabled-motion mode of e.g. the robot 105, press 106, etc. The received motion positions may be supplied by the receptor/sender module 206 to the press-operation virtualizer module 204 for virtualization of said motion positions.

The press-operation virtualizer module 204 may be configured to represent, in the virtual environment, a virtual version of the manufacturing (e.g. press) operation. Said representation of the virtual manufacturing operation may include representing virtual motion of the virtual loading robot 105, virtual motion of the virtual press device 106, etc. The virtual motion of the virtual robot 105 may be represented according to received calculated real positions of the robot 105. The virtual motion of the virtual press device 106 may be represented according to received real positions of the press device 106. Same or similar virtualization principles may be used to represent virtual version and motion(s) of any real device or element participating in the manufacturing operation to be simulated.

Simulation systems 200 according to present disclosure may further comprise a programmer module 205. This module 205 may be configured to represent a virtual version of a predefined program ruling the motion of first manufacturing device (e.g. robot 105) and to receive update(s) into said virtual program to e.g. adjust the virtual motion of the virtual robot. This/these update(s) into de virtual program may be performed by a user or operator through corresponding input or data entry functionality. This/these update(s) may be decided and inputted by the operator during or after visualization of the simulation, and may be aimed at correcting, improving, preventing, etc. malfunction(s) and/or imperfection(s) detected during the simulation. The programmer module 205 may be further configured to send all or part of the updates performed into the virtual version of the predefined program to accordingly update the real program driving the real first manufacturing device (e.g. robot) 205.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed at a particular module may be performed at one or more other modules and/or by one or more other devices instead of or in addition to the function performed at the described particular module.

Moreover, the modules may be implemented across multiple devices, associated or linked to corresponding simulation system(s) 200, and/or other components that may be local or remote to one another. Additionally, the modules may be moved from one device and added to another device, and/or may be included in both devices, associated to corresponding simulation system(s) 200. Any software implementations may be tangibly embodied in one or more storage media, such as e.g. a memory device, a floppy disk, a compact disk (CD), a digital versatile disk (DVD), or other devices that may store computer code.

Simulation systems 200 according to present disclosure may be implemented by computing means, electronic means or a combination thereof. The computing means may comprise a set of instructions (that is, a computer program) and then the simulation system(s) 200 may comprise a memory and a processor, embodying said set of instructions stored in the memory and executable by the processor. The instructions may comprise functionality or functionalities to execute simulation methods such as e.g. the ones described with reference to other Figures.

In case the simulation system(s) 200 is/are implemented only by electronic means, a controller of the system may be, for example, a CPLD (Complex Programmable Logic Device), an FPGA (Field Programmable Gate Array) or an ASIC (Application-Specific Integrated Circuit).

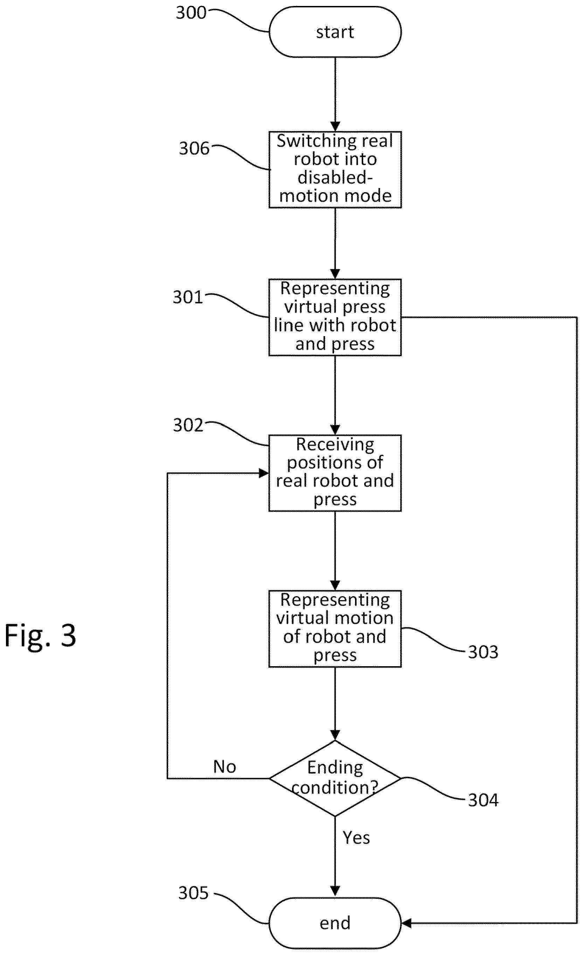

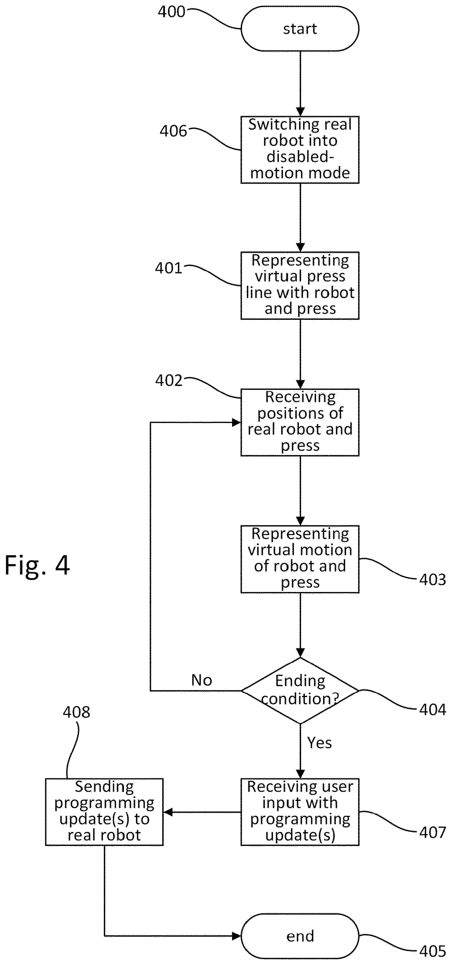

In case the simulation system(s) 200 is/are a combination of electronic and computing means, the computing means may comprise a set of instructions (e.g. a computer program) and the electronic means may comprise any electronic circuit capable of implementing the corresponding method steps of the proposed simulation methods, according to e.g. Figures 3 and 4.

The computer program may be embodied on a storage medium (for example, a CD-ROM, a DVD, a USB drive, a computer memory or a read-only memory) or carried on a carrier signal (for example, on an electrical or optical carrier signal).

The computer program may be in the form of source code, object code, a code intermediate source and object code such as in partially compiled form, or in any other form suitable for use in implementing simulation methods according to e.g. Figures 3 and 4. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means. Alternatively, the carrier may be an integrated circuit in which the computer program is embedded, the integrated circuit being adapted for performing, or for use in the performance of, the relevant methods.

Figure 3 is a flow chart schematically illustrating simulation methods according to examples. Such simulation methods are performable by/through systems similar to the ones described with reference to Figures 1 and 2. Hence, number references from said Figures 1 and 2 may be reused in following description of Figure 3 for the sake of completeness.

Simulation methods according to present disclosure may start when a starting condition is detected at e.g. start block 300. Said starting condition may include e.g. activation of a simulation or virtualization functionality, reception of motion data from first manufacturing device (e.g. robot) 105 or similar machine etc.

Such simulation methods may further comprise (at e.g. motion-disabling block 306) sending a control signal to first manufacturing device (e.g. robot 105) to activate a disabled-motion mode, under which the robot 105 calculates positions to be achieved by the robot but motion (according to calculated positions) is disabled, i.e. no motion is performed by the robot. In alternative implementations, activation of the disabled-motion mode may be performed manually by an operator through e.g. corresponding switch in the robot 105. Instead of control signal, a notification may be generated to prompt the operator to activate the disabled-motion mode. "Motion disabling" principles and/or features described in detail with reference to Figures 1 and 2 are similarly applicable to this "motion-disabling" block 306. For example, activation of the motion-disabled mode of the robot 105 may be performed by/through the receptor/sender module 206 in same or similar manner as described with respect to Figure 2.

Simulation methods may yet further comprise (at e.g. block 301) representing, in a virtual environment, a virtual version of first manufacturing device (e.g. robot) 105, a virtual version of second manufacturing device (e.g. press device) 106, and any other device or machine intervening in the manufacturing operation to be simulated. "Virtualizing" principles and/or features described in detail with reference to Figures 1 and 2 are similarly applicable to this "virtualizing" block 301. For example, such a virtualization of robot 105, press device 106, etc. may be performed by/through the press-line virtualizer module 202 and the virtual environment displayer 203 in same or similar manner as described with respect to Figure 2.

Simulation methods may still further comprise, at e.g. block 302, receiving motion positions including calculated positions of the first manufacturing device (e.g. robot) 105, and positions of the second manufacturing device (e.g. press device) 106 defining the motion of the press 106. "Receiving" principles and/or features described in detail with reference to Figures 1 and 2 may be applicable to this "receiving" block 302. For example, such a reception of motion data may be performed by/through the receptor/sender module 206 of Figure 2.

Simulation methods may yet further comprise (at e.g. block 303) representing, in the virtual environment, a virtual version of a manufacturing operation. The virtual manufacturing operation may include virtual motion of virtual version of first manufacturing device (e.g. robot) 105. Virtual manufacturing operation may also include virtual motion of virtual version of second manufacturing device (e.g. press device) 106. Virtual motion of virtual robot 105 may be represented depending on the received real calculated positions of the real robot 105. Virtual motion of virtual press 106 may be represented depending on the received real positions of the real press device 106. In general, any virtual motion may be represented according to "motion-virtualizing" principles and/or features described in detail with reference to Figures 1 and 2, so as to implement this "virtualizing" block 303. For instance, such a virtualization of real motions may be performed by/through the press-operation virtualizer module 204 and the virtual environment displayer 203 in same or similar manner as described with respect to Figure 2.

A verification of whether an ending condition is satisfied may be then performed at e.g. block 304. This ending condition may include e.g. deactivation of simulation mode, switch off by user of simulation method/system, loss of communications with robot 105 and/or further moving device(s), etc. In case of positive or true result "Yes" of said verification, the method may continue to block 305 for ending its execution and, otherwise "No", the method may loopback to block 302 for receiving and virtualizing new motion positions.

Figure 4 is a flow chart schematically illustrating simulation methods according to further example. These methods may be similar to those described with reference to previous Figure 3. In particular, methods according to Figure 4 may comprise a start block 400, a motion-disabling block 406, a device-virtualization module 401, a receiving module 402, a motion-virtualization module 403, a decision block 404 and an end block 405 that may be coincident or similar to blocks 300, 306 and 301 - 305 of Figure 3, respectively.

A difference may reside in program-updating block 407 and update-transferring block 408. The program-updating block 407 may implement functionalities of representing a virtual version of real program ruling or driving the first manufacturing device (e.g. robot) 105, in updatable manner so as to permit adjustment of the virtual motion of the virtual robot 105 during simulation. The update-transferring block 408 may implement functionalities of sending one or more updates performed in the virtual predefined program to accordingly update the real predefined program in the robot 105. This way, a malfunction, improvement, correctable aspect, etc. detected during simulation may be resolved or attenuated by suitably updating the virtual program and transferring said updates into the real program driving the real robot 105.

The methods of Figures 3 and 4 are shown with blocks performed in a particular order. However, blocks may be executed in other orders different from the ones illustrated in the figures. Even at least some of the blocks may be run at least partially simultaneously or concurrently. For example, blocks 407 - 408 may be performed substantially in parallel with blocks 402 - 404. In other words, updating the virtual program and transferring updates to the real program (blocks 407 - 408) may be performed at least partially concurrently with reception and virtualization of new motion positions (blocks 402 - 404), i.e. during simulation.

The skilled person will appreciate that manufacturing lines other than press lines may be very similarly simulated by/through methods and systems described with reference to the proposed figures, such as e.g. cutting lines, assembly lines, etc. It is thus clear that, even though the figures show specific press line examples, obvious variations and/or adaptations may be taken into account to simulate other types of manufacturing lines (e.g. cutting lines, assembly lines, etc.) falling within the scope of the present disclosure.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of simulating operation of a first manufacturing device in cooperation with a second manufacturing device to jointly perform a manufacturing operation, wherein
the first manufacturing device is a programmable moving device configured to move with respect to the second manufacturing device according to a predefined program, said predefined program including calculating positions of the first manufacturing device to be achieved depending on the manufacturing operation, so as to drive the first manufacturing device to move according to the calculated positions; wherein
the first manufacturing device is configured to operate in a disabled-motion mode in which positions of the first manufacturing device are calculated but motion is disabled; and wherein the method includes:
activating the disabled-motion mode of the first manufacturing device;
representing, in a virtual environment, a virtual version of the first manufacturing device and a virtual version of the second manufacturing device;
receiving motion positions including the calculated positions of the first manufacturing device;
representing, in the virtual environment, a virtual version of the manufacturing operation including virtual motion of the virtual version of the first manufacturing device depending on the received calculated positions of the first manufacturing device.

2. A method according to claim 1, wherein the second manufacturing device is a moving device and the calculation of positions of the first manufacturing device further depends on positions defining the motion of the second manufacturing device; wherein
receiving the motion positions further includes receiving positions of the second manufacturing device defining the motion of the second manufacturing device; and wherein
representing the virtual version of the manufacturing operation further includes representing virtual motion of the virtual version of the second manufacturing device depending on the received positions of the second manufacturing device.

3. A method according to any of claims 1 or 2, wherein activating the disabled-motion mode of the first manufacturing device comprises sending a control signal to the first manufacturing device indicating or requesting activation of the disabled-motion mode.

4. A method according to any of claims 1 to 3, wherein receiving the motion positions includes receiving the motion positions through a high speed rate communication protocol.

5. A method according to claim 4, wherein the high speed rate communication protocol is an Ethernet based protocol.

6. A method according to any of claims 1 to 5, wherein the predefined program is updatable; and wherein the method further includes representing a virtual version of the predefined program that is updatable to adjust the virtual motion of the virtual version of the first manufacturing device.

7. A method according to claim 6, further comprising sending an update performed in the virtual version of the predefined program to accordingly update the predefined program in the first manufacturing device.

8. A method according to any of claims 1 to 7, wherein at least part of the virtual representations performed in the virtual environment is/are based on augmented reality and/or any existing platform configured to virtualize moving machines and their operation.

9. A method according to any of claims 1 to 8, wherein the first manufacturing device is a robot with a plurality of motion axes, such that the motion of the first manufacturing device includes motion of the motion axes.

10. A method according to any of claims 1 to 9, wherein the second manufacturing device is a press device.

11. A computer program comprising program instructions for causing a computing system to perform a method according to any of claims 1 to 10 of simulating operation of a first manufacturing device in cooperation with a second manufacturing device to jointly perform a manufacturing operation.

12. A computer program according to claim 11, embodied on a storage medium and/or carried on a carrier signal.

13. A computing system for simulating operation of a first manufacturing device in cooperation with a second manufacturing device to jointly perform a manufacturing operation, the computing system comprising a memory and a processor, embodying instructions stored in the memory and executable by the processor, wherein
the instructions comprise functionality or functionalities to execute a method according to any of claims 1 to 10 of simulating operation of a first manufacturing device in cooperation with a second manufacturing device to jointly perform a manufacturing operation.

14. A system for simulating operation of a first manufacturing device in cooperation with a second manufacturing device to jointly perform a manufacturing operation, wherein
the first manufacturing device is a programmable moving device configured to move with respect to the second manufacturing device according to a predefined program, said predefined program including calculating positions of the first manufacturing device to be achieved depending on the manufacturing operation, so as to drive the first manufacturing device to move according to the calculated positions; wherein
the first manufacturing device is configured to operate in a disabled-motion mode in which positions of the first manufacturing device are calculated but motion is disabled; and wherein the system includes:
a disabled-motion module configured to activate the disabled-motion mode of the first manufacturing device;
a first representing module configured to represent, in a virtual environment, a virtual version of the first manufacturing device and a virtual version of the second manufacturing device;
a receptor module configured to receive motion positions including the calculated positions of the first manufacturing device;
a second representing module configured to represent, in the virtual environment, a virtual version of the manufacturing operation including virtual motion of the virtual version of the first manufacturing device depending on the received calculated positions of the first manufacturing device.

15. A manufacturing line including a first manufacturing device, a second manufacturing device, and a computing system according to claim 13 or a system according to claim 14 for simulating operation of the first manufacturing device in cooperation with the second manufacturing device to jointly perform a manufacturing operation.
